Europäisches Patentamt

European Patent Office

Office européen des brevets

(19)

(11) Veröffentlichungsnummer: **0 419 834 B1**

(12) # EUROPÄISCHE PATENTSCHRIFT

(45) Veröffentlichungstag der Patentschrift: **27.07.94**

(51) Int. Cl.⁵: **B28D 1/06**

(21) Anmeldenummer: **90115867.5**

(22) Anmeldetag: **18.08.90**

(54) **Vorrichtung zum spanenden Trennen eines Werkstückes.**

(30) Priorität: **23.09.89 DE 3931837**

(43) Veröffentlichungstag der Anmeldung:
**03.04.91 Patentblatt 91/14**

(45) Bekanntmachung des Hinweises auf die
Patenterteilung:
**27.07.94 Patentblatt 94/30**

(84) Benannte Vertragsstaaten:
**AT BE CH DE DK ES FR GB GR IT LI LU NL SE**

(56) Entgegenhaltungen:
**CH-A- 360 638**
**DE-A- 2 306 877**
**DE-C- 869 170**
**US-A- 1 243 390**

(73) Patentinhaber: **Werner, Peter Günther Prof.
Dr.-Ing.
Pestalozzistrasse 38
D-50171 Kerpen(DE)**

(72) Erfinder: **Werner, Peter Günther Prof. Dr.-Ing.
Pestalozzistrasse 38
D-50171 Kerpen(DE)**

(74) Vertreter: **Andrejewski, Walter, Dr. et al
Patentanwälte
Andrejewski, Honke & Partner
Postfach 10 02 54
D-45002 Essen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum spanenden Trennen eines Werkstückes, mit einem periodisch bewegten Werkzeughalter, zumindest einem blattartigen Werkzeug, einem Werkstückauflager und einem auf den Werkzeughalter wirkenden Antrieb, wobei der Antrieb dem Werkzeughalter eine schaukelnde Bewegung mit Parallelogrammlenkerkinematik und vorgegebenem Schwingradius verleiht, wobei der Parallelogrammlenkerkinematik Pendelarme zugeordnet sind, die gemäß den Patentansprüchen 1 und 3 auf der vom Werkstück abgewandten Werkzeugseite angeordnet sind, wobei die dem Werkstück zugewandte Schneidkante des Werkzeuges zumindest teilweise nicht gerade verlauft, wobei ein mit der Schneidkante im Werkstück erzeugter Trennspalt eine Trennspaltgrundfläche mit einer der Trennspaltweite entsprechenden Breite und mit vorgegebener Schnittkontur aufweist.

Es versteht sich, daß das Werkzeug im Rahmen des beschriebenen Aufbaus der Vorrichtung insgesamt so ausgebildet ist, wie es in der modernen spanenden Trenntechnologie üblich ist. Es versteht sich fernerhin, daß die Vorrichtung eine Zustelleinrichtung aufweist, die nach Maßgabe des Trennfortschritts das Werkzeug auf das Werkstück oder umgekehrt das Werkstück auf das Werkzeug zustellt und die erforderliche Andrückkraft oder Schnittkraft erzeugt. Die Schnittkontur stellt sich beim Trennvorgang infolge der Wechselwirkung der Schneidkante des Werkzeuges mit dem Werkstück von selbst ein. Parallelogrammlenkerkinematik bezeichnet in bezug auf den Werkzeughalter die kinematischen Zusammenhänge, die entstehen, wenn zwei gleichlange Lenker den klassischen Parallelogrammgesetzen entsprechend um zwei feste Punkte schwingen und der Werkzeughalter gleichsam als Parallelogrammseite an die freien Endpunkte der Lenker angeschlossen ist. Im allgemeinen wird man die Parallelogrammlenkerkinematik dadurch verwirklichen, daß zumindest zwei Parallelogrammlenker oder Pendelarme entsprechend angeordnet und angetrieben werden. Mit den Hilfsmitteln der modernen rechnergesteuerten Antriebs- und Steuerungstechnik kann die Parallelogrammlenkerkinematik auch auf andere Weise verwirklicht werden. Die Werkstücke, die mit der erfindungsgemäßen Vorrichtung getrennt werden sollen, können aus den verschiedensten, spanend trennbaren Werkstoffen bestehen. Insbesondere handelt es sich darum, von einem Siliciumblock dünne Siliciumplatten abzutrennen, und zwar mit hoher Leistung, d.h. hoher Trennrate sowie um das Trennen dünner Granitplatten.

Bei der bekannten Vorrichtung, von der die Erfindung ausgeht (DE-C-553 031 aus 1932), ist die Schneidkante des Werkzeuges in der Seitenansicht umgekehrt firstförmig gestaltet, und zwar mit sehr großem Firstwinkel, so daß die Schneidkante fast gerade verläuft. Die firstförmige Gestaltung dient der Spanabführung. Bei der bekannten Ausführungsform stellt sich zwischen der Schneidkante und der Schnittkontur ein langgestreckt linienförmiger Kontakt ein. Selbst bei hoher Andrückkraft erreicht man wegen des langgestreckten Linienkontaktes nur eine verhältnismäßig geringe Leistung. Allerdings ist die Leistung der Andrückkraft optimiert. Das versucht man bei der bekannten Vorrichtung durch besondere, zusätzliche Steuerungseinrichtungen und Steuerungsmaßnahmen für die Andrückkraft. Zu den modernen Trenntechnologien, die insbesondere bei Silicium und anderen empfindlichen Werkstoffen eingesetzt werden (vgl. Sonderdruck aus Industriediamanten-Rundschau IDR 23, Nr. 1, Prof. Dr.-Ing. P. G. Werner, Dipl.-Ing. M. Kenter, Dipl.-Ing. M. Cinar "Stand der Technik und zukünftige Entwicklungsmöglichkeiten beim Trennen von Silicium"), haben die vorstehend beschriebenen, lange bekannten Maßnahmen nichts beigetragen.

Der Erfindung liegt die Aufgabe zugrunde, eine Vorrichtung des eingangs beschriebenen Aufbaus so weiter auszubilden, daß mit geringer Andrückkraft eine große Trennrate erreichbar ist, und zwar inbesondere beim Trennen von Silicium und anderen empfindlichen Werkstoffen.

Zur Lösung dieser Aufgabe lehrt die Erfindung eine Vorrichtung der eingangs beschriebenen Art in drei Ausführungsformen entsprechend den Kennzeichnungsteilen der Patentansprüche 1, 2 und 3. Zur Lösung der Aufgabe lehrt die Erfindung gemäß Patentanspruch 1, daß die Schneidkante kreisbogenförmig mit einem Kreisbogenradius $R_b$ ausgeführt ist, daß zwischen dem Schnittkonturradius $R_w$ der kreisbogenförmigen Schnittkontur, dem Kreisbogenradius $R_b$ der Schneidkante und dem Schwinradius $R_S$ die Beziehung $R_W = R_b - R_S$ eingerichtet ist, wobei der Kreisbogenradius $R_b$ größer als der Schwinradius $R_S$ und größer als der Schnittkonturradius $R_W$ ist sowie die Schneidkante konkav verläuft, und daß der Schwingradius $R_S$ so gewählt ist, daß zwischen der Schneidkante und der Schnittkontur eine Arbeitsberührung in Form eines Quasipunktkontaktes erfolgt. Zur Lösung der Aufgabe lehrt die Erfindung gemäß Patentanspruch 2, daß die Pendelarme auf der dem Werkstück zugewandten Werkzeugseite angeordnet sind, daß die Schneidkante kreisbogenförmig mit einem Kreisbogenradius $R_b$ ausgeführt ist, daß zwischen dem Schnittkonturradius $R_W$ der kreisbogenförmigen Schnittkontur, dem Kreisbogenradius $R_b$ der Schneidkante und dem Schwingradius $R_S$ die Beziehung $R_W = R_S - R_b$ eingerichtet ist, wobei der Kreisbogenradius $R_b$ kleiner als der Schwingradius

$R_S$ ist, der Schwingradius $R_S$ größer ist als der Schnittkonturradius $R_W$ sowie die Schneidkante konvex verläuft, und daß der Schwingradius $R_S$ so gewählt ist, daß zwischen der Schneidkante und der Schnittkontur eine Arbeitsberührung in Form eines Quasipunktkontaktes erfolgt. Zur Lösung der Aufgabe lehrt die Erfindung weiterhin gemäß Patentanspruch 3, daß die Schneidkante kreisbogenförmig mit einem Kreisbogenradius $R_b$ ausgeführt ist, daß zwischen dem Schnittkonturradius $R_W$ der kreisbogenförmigen Schnittkontur, dem Kreisbogenradius $R_b$ der Schneidkante und dem Schwingradius $R_S$ die Beziehung $R_W = R_b + R_S$ eingerichtet ist, wobei der Kreisbogenradius $R_b$ und der Schwingradius $R_S$ kleiner sind als der Schnittkonturradius $R_W$ sowie die Schneidkante konvex verläuft, und daß der Schwingradius $R_S$ so gewählt ist, daß zwischen der Schneidkante und der Schnittkontur eine Arbeitsberührung in Form eines Quasipunktkontaktes erfolgt. - Beim spanenden Trennen eines Werkstückes ist es bekannt, mit Werkzeugen zu arbeiten, deren Schneidkante kreisbogenförmig gestaltet ist und die auch eine kreisbogenförmige Schnittkontur generieren (DE-C-240 463, US-A-44 74 164). Hier arbeiten die Werkzeuge jedoch im Rahmen einer anderen, wenn auch mit einer Pendelbewegung versehenen Kinematik, in der der Schwingradius nicht so gewählt werden kann, daß zwischen der Schneidkante und der Schnittkontur eine Arbeitsberührung in Form eines Quasipunktkontaktes erfolgt. Bekannt ist auch ein Bearbeitungswerkzeug für Hartmaterialien (DE-A-2 306 877), bei dem ein Arbeitsblatt die Gestalt eines etwa kreissegmentförmigen Schwertes aufweist, das exzentrisch auf einer Welle drehbar gelagert ist und bei dem ein Antrieb für eine periodische, hin- und hergehende Schwenkbewegung des Arbeitsblattes vorgesehen ist. Auch bei diesem Bearbeitungswerkzeug wird durch Variation des Schwingradius nicht erreicht, daß zwischen der Schneidkante und der Schnittkontur eine Arbeitsberührung in Form eines Quasipunktkontaktes erfolgt.

Die Erfindung beruht auf der Erkenntnis, daß bei Verwirklichung der Parallelogrammlenkerkinematik bei einer Vorrichtung des eingangs beschriebenen Aufbaus der Trennvorgang praktisch mit Punktkontakt zwischen Schneidkante und Schnittkontur verwirklicht werden kann, wenn die beschriebenen Bedingungen in bezug auf die Geometrie der Schneidkante und der Schnittkontur verwirklicht werden und der Schwingradius entsprechend eingerichtet wird. Ein geeigneter, die Erzeugung des Punktkontaktes sicherstellender Schwingradius kann experimentell leicht ermittelt werden. In der Praxis wird aus dem reinen Punktkontakt ein Quasipunktkontakt mit geringer Erstreckung in Richtung der Schaukelbewegung, und zwar nach Maßgabe der Zustellung und damit der Andrückkraft. Es versteht sich, daß der Kontaktpunkt über die Werkstückbreite und die Länge der Schneidkante wandert.

Arbeitet man nach der Lehre der Erfindung, so wird man die Vorrichtungen im allgemeinen so ausbilden, wie es vorstehend beschrieben ist. Denkbar sind aber auch Ausführungsformen, bei denen der Werkzeughalter fest angeordnet und das Werkstück nach Maßgabe der Parallelogrammlenkerkinematik bewegbar angeordnet ist.

Erfindungsgemäß wird während eines Arbeitshubes des Werkzeuges eine punktartige Berührung zwischen dem Arbeitsbereich des Werkzeuges und dem Werkstück erzielt, so daß mit einer verhältnismäßig hohen spezifischen Kontaktkraft - bei geringer Gesamtschnittkraft - gearbeitet werden kann. Dadurch wird eine Überbeanspruchung des Werkzeuges trotz hoher Trennraten vermieden.

Durch das Wandern des Kontaktpunktes entlang dem Arbeitsbereich des Trennwerkzeuges und entlang der Schnittkontur des zu trennenden Werkstückes sowie durch den gekrümmten Verlauf der Schnittkante und der Schnittkontur wird außerdem eine gute Abführung der anfallenden Abtragspartikel und ein gleichmäßiger Werkzeugverschleiß erzielt. Die erfindungsgemäße Vorrichtung ermöglicht es weiterhin, durch Einsatz entsprechender Trennwerkzeuge die Schnittgeschwindigkeit und den Vorschub oder die Zustellung gegenüber heute gebräuchlichen Trennverfahren wesentlich zu erhöhen, wodurch die Schnittzeiten erheblich reduziert werden können, was für die Wirtschaftlichkeit von großer Bedeutung ist. Besonders vorteilhaft wirkt sich aus, daß der Berührungspunkt zwischen Schneidkante und Werkstück über die gesamte Länge der Trennfuge wandert. Das bedeutet, daß während einer Hubbewegung jeder Punkt des Werkzeug-Arbeitsbereiches mit dem Werkstück in Kontakt kommt und daß auch jeder Punkt der Schnittkontur mit dem Werkzeug in Kontakt kommt. Dadurch wird gewährleistet, daß der Verschleiß an jedem Punkt des Werkzeug-Arbeitsbereiches annähernd gleich groß ist, so daß die Krümmung des Arbeitsbereiches nahezu konstant bleibt. Die relativ niedrigen Gesamtschnittkräfte, wie sie bei der erfindungsgemäßen Trennvorrichtung aufgrund des Punktkontaktes auftreten, führen auch zu wesentlich geringeren Stärken der Werkstückabschnitte. So ist es z.B. möglich, Granitblöcke in Platten von 10 Millimetern (und möglicherweise kleiner) zu trennen, während mit heutigen Trennmethoden Schnittstärken unter 30 Millimetern wegen der hohen Gesamtschnittkräfte nicht möglich sind.

Im folgenden wird die Erfindung anhand einer lediglich ein Ausführungsbeispiel darstellenden Zeichnung ausführlicher erläutert.

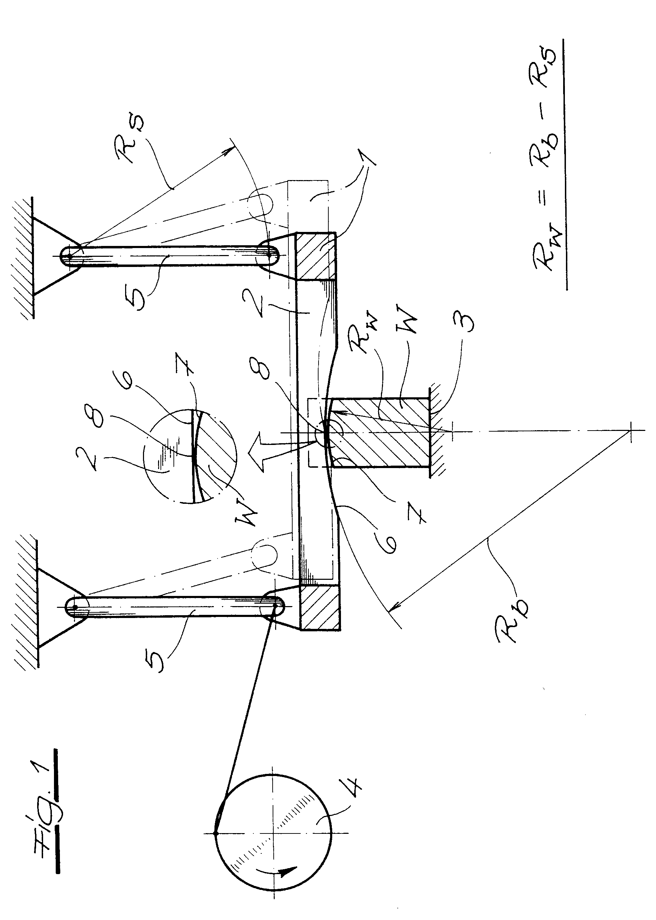

Die Fig. 1, 2 und 3 zeigen schematisch erfindungsgemäße Vorrichtungen zum Trennen eines Werkstückes.

Zum grundsätzlichen Aufbau der dargestellten Vorrichtungen gehört zunächst ein periodisch bewegter Werkzeughalter 1, ein blattartiges Werkzeug 2, ein Werkstückauflager 3 und ein auf den Werkzeughalter 1 wirkender Antrieb 4. Der Antrieb 4 verleiht dem Werkzeughalter eine schaukelnde Bewegung mit Parallelogrammlenkerkinematik und vorgegebenem Schwingradius $R_S$. In den Ausführungsbeispielen sind zur Verdeutlichung dieser Kinematik Parallelogrammlenker 5 dargestellt worden. Das Werkzeug 2 besitzt eine dem Werkstück zugewandte und gegenüber der Werkstückauflagerebene nichtgerade verlaufende Schneidkante 6. Das Werkzeug 2 erzeugt im Werkstück W einen Trennspalt und im Trennspalt eine Trennspaltgrundfläche mit einer der Trennspaltweite entsprechenden Breite und mit vorgegebener Schnittkontur 7. Aus Gründen der Deutlichkeit wurde der Trennspalt nicht gezeichnet.

Bei allen Ausführungsformen ist die Schneidkante 6 kreisbogenförmig mit einem Kreisbogenradius $R_b$ ausgeführt. Sie generiert eine kreisbogenförmige Schnittkontur 7 mit dem Schnittkonturradius $R_W$. In allen Fällen ist der Kreisbogenradius $R_b$ der Schneidkante 6 größer oder kleiner als der Schnittkonturradius $R_W$. Der Schwingradius $R_S$ ist stets so gewählt, daß zwischen der Schneidkante 6 und der Schnittkontur 7 eine Arbeitsberührung in Form eines Quasipunktkontaktes 8 erfolgt.

Bei der Ausführungsform nach Fig. 1 besteht zwischen dem Schnittkonturradius $R_W$, dem Kreisbogenradius $R_b$ der Schneidkante 6 und dem Schwingradius $R_S$ die Beziehung $R_W = R_b - R_S$. Diese Beziehung wurde in die Fig. 1 eingetragen. Man erkennt, daß hier der Kreisbogenradius $R_b$ größer ist als der Schwingradius $R_S$ und größer als der Schnittkonturradius $R_W$ der Schnittkontur 7. Die Schneidkante 6 verläuft konkav.

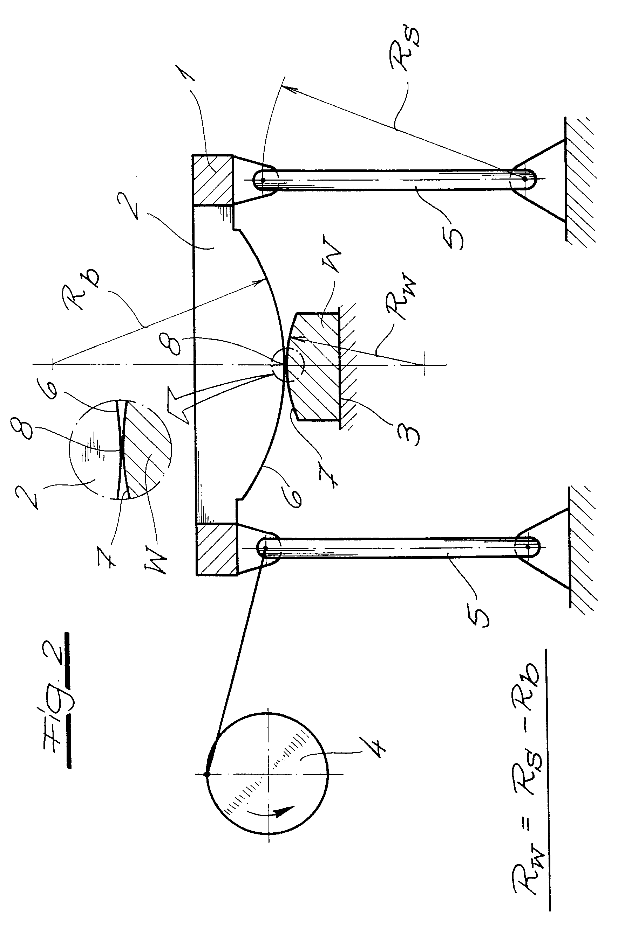

Anders sind die Verhältnisse bei der Ausführungsform nach Fig. 2. Hier besteht zwischen dem Schnittkonturradius $R_W$, dem Kreisbogenradius $R_b$ der Schneidkante 6 und dem Schwingradius $R_S$ die Beziehung $R_W = R_S - R_b$, die in die Fig. 2 ebenfalls eingetragen wurden. Die Anordnung ist so getroffen, daß der Kreisbogenradius $R_b$ kleiner als der Schwingradius $R_S$ ist der Schwingradius $R_S$ größer ist als der Schnittkonturradius $R_W$ der Schnittkontur 7. Hier verläuft die Schneidkante 6 konvex.

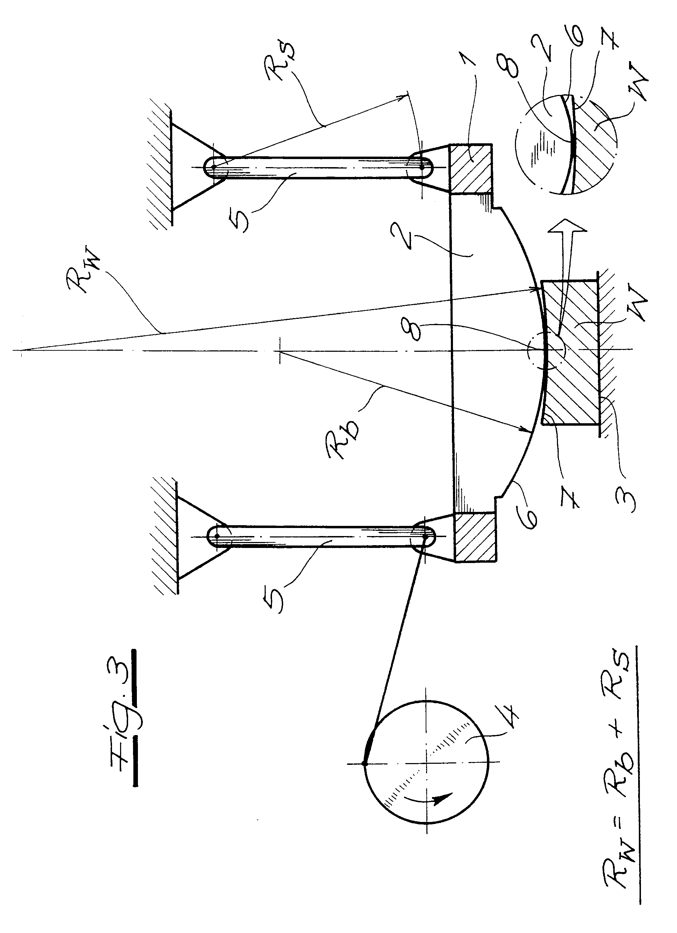

Für die Ausführungsform nach Fig. 3 gilt, daß zwischen dem Schnittkonturradius $R_W$, dem Kreisbogenradius $R_b$ der Schneidkante 6 und dem Schwingradius $R_S$ die Beziehung $R_W = R_b + R_S$ gilt, wie es in der Fig. 3 eingetragen wurde. Hier sind der Kreisbogenradius $R_b$ und der Schwingradius $R_S$ kleiner als der Schnittkonturradius $R_W$ der Schnittkontur 7. Die Schneidkante 6 verläuft konvex.

Im Ausführungsbeispiel wird das blattartige Werkzeug 2 wie bei Schaukelgattersägen üblich bewegt. Es versteht sich, daß sich die beschriebenen Schneidkanten 6 auch an Werkzeugen verwirklichen lassen, die ihrerseits als Innenlochtrennelement oder als scheibenförmiges Trennelement rotieren, wobei diese Rotationsbewegung um eine Achse dieser Werkzeuge der beschriebenen Kinematik überlagert ist.

In diesen Fällen rotiert zwar das Werkzeug, die Schneidkanten 6 bleiben bei der Rotation jedoch unverändert in der beschriebenen Weise konvex oder konkav.

**Patentansprüche**

1. Vorrichtung zum spanenden Trennen eines Werkstückes, - mit

einem periodisch bewegten Werkzeughalter (1),

zumindest einem blattartigen Werkzeug (2),

einem Werkstückauflager (3) und

einem auf den Werkzeughalter (1) wirkenden Antrieb (4),

wobei der Antrieb (4) dem Werkzeughalter (1) eine schaukelnde Bewegung mit Parallelogrammlenkerkinematik und vorgegebenem Schwingradius $R_S$ verleiht, wobei der Parallelogrammlenkerkinematik auf der vom Werkstück (W) abgewandten Werkzeugseite angeordnete Pendelarme (5) zugeordnet sind, wobei die dem Werkstück (W) zugewandte Schneidkante (6) des Werkzeuges (2) zumindest teilweise nicht gerade verläuft, wobei ein mit der Schneidkante (6) im Werkstück (W) erzeugter Trennspalt eine Trennspaltgrundfläche mit einer der Trennspaltweite entsprechenden Breite und vorgegebener Schnittkontur (7) aufweist, **dadurch gekennzeichnet**, daß die Schneidkante (6) kreisbogenförmig mit einem Kreisbogenradius $R_b$ ausgeführt ist, daß zwischen dem Schnittkonturradius $R_W$ der kreisbogenförmigen Schnittkontur (7), dem Kreisbogenradius $R_b$ der Schneidkante (6) und dem Schwingradius $R_S$ die Beziehung

$$R_W = R_b - R_S$$

eingerichtet ist, wobei der Kreisbogenradius $R_b$ größer als der Schwingradius $R_S$ und größer als der Schnittkonturradius $R_W$ ist sowie die Schneidkante (6) konkav verläuft, und daß der Schwingradius $R_S$ so gewählt ist, daß zwischen der Schneidkante (6) und der Schnittkontur (7) eine Arbeitsberührung in Form eines Quasipunktkontaktes (8) erfolgt (Fig. 1).

2. Vorrichtung zum spanenden Trennen eines Werkstückes, - mit einem periodisch bewegten Werkzeughalter (1), zumindest einem blattartigen Werkzeug (2), einem Werkstückauflager (3) und einem auf den Werkzeughalter (1) wirkenden Antrieb (4) wobei der Antrieb (4) dem Werkzeughalter (1) eine schaukelnde Bewegung mit Parallelogrammlenkerkinematik und vorgegebenem Schwingradius $R_S$ verleiht, wobei der Parallelogrammlenkerkinematik Pendelarme (5) zugeordnet sind, wobei die dem Werkstück (W) zugewandte Schneidkante (6) des Werkzeuges zumindest teilweise nicht gerade verläuft, wobei ein mit der Schneidkante (6) im Werkstück (W) erzeugter Trennspalt eine Trennspaltgrundgläche mit einer der Trennspaltweite entsprechenden Breite und vorgegebener Schnittkontur (7) aufweist, dadurch gekennzeichnet, daß die Pendelarme (5) auf der dem Werkstück (W) zugewandten Werkzeugseite angeordnet sind, daß die Schneidkante (6) kreisbogenförmig mit einem Kreisbogenradius $R_b$ ausgeführt ist, daß zwischen dem Schnittkonturradius $R_W$ der kreisbogenförmigen Schnittkontur (7), dem Kreisbogenradius $R_b$ der Schneidkante (6) und dem Schwingradius $R_S$ die Beziehung

$$R_W = R_S - R_b$$

eingerichtet ist, wobei der Kreisbogenradius $R_b$ kleiner als der Schwingradius $R_S$ ist, der Schwingradius $R_S$ größer ist als der Schnittkonturradius $R_W$ sowie die Schneidkante (6) konvex verläuft, und daß der Schwingradius $R_S$ so gewählt ist, daß zwischen der Schneidkante (6) und der Schnittkontur (7) eine Arbeitsberührung in Form eines Quasipunktkontaktes (8) erfolgt (Fig. 2).

3. Vorrichtung nach dem Oberbegriff des Anspruches 1, dadurch gekennzeichnet, daß die Schneidkante (6) kreisbogenförmig mit einem Kreisbogenradius $R_b$ ausgeführt ist, daß zwischen dem Schnittkonturradius $R_W$ der kreisbogenförmigen Schnittkontur (7), dem Kreisbogenradius $R_b$ der Schneidkante (6) und dem Schwingradius $R_S$ die Beziehung

$$R_W = R_b + R_S$$

eingerichtet ist, wobei der Kreisbogenradius $R_b$ und der Schwingradius $R_S$ kleiner sind als der Schnittkonturradius $R_W$ sowie die Schneidkante (6) konvex verläuft, und daß der Schwingradius $R_S$ so gewählt ist, daß zwischen der Schneidkante (6) und der Schnittkontur (7) eine Arbeitsberührung in Form eines Quasipunktkontaktes (8) erfolgt. (Fig. 3).

## Claims

1. A means for cutting of a workpiece by machine - including an intermittently travelling toolholder (1),
   at least one blade-type tool (2),
   a tool support (3) and
   a drive (4) activating a toolholder (1),
   with the drive (4) causing a reciprocal movement including a parallelogram control kinematic and a specified swivel radius $R_S$ of the toolholder (1), with the parallelogram control kinetic being allocated to swivel arms (5) arranged on the tool side facing away from the workpiece (W), with the cutting edge (6) of the tool facing the workpiece (W), at least partially not extending in a straight line, with a separating gap created by the cutting edge (6) in the workpiece (W) including a separating gap base of a width depending on the separating gap width and a specified cutting contour (7) **characterized** in that the cutting edge (6) is of a circular shape based on a circular radius $R_b$, that a relationship of

$$R_W = R_b - R_S$$

exists between the cutting contour radius $R_W$, the circular cutting contour (7), the circular radius $R_b$, the cutting edge (6) and the swivel radius $R_S$, with the circular radius $R_b$ being larger than the swivel radius $R_S$ and larger than the cutting contour radius $R_W$ and the cutting edge (6) is of a concave shape and that the swivel radius $R_S$ has been selected in a way that a quasi point working contact (8) is made between the cutting edge (6) and the cutting contour (7) (Fig. 1).

2. A means for cutting of a workpiece by machine - including an intermittently travelling toolholder (1) at least one blade-type tool (2), a tool support (3) and a drive (4) activating a toolholder (1), with the drive (4) causing a reciprocal movement including a parallelogram control kinematic and a specified swivel radius $R_S$ of the toolholder, with the parallelogram control kinetic being allocated to swivel arms (5) with the cutting edge (6) of the tool facing the workpiece (W), at least partially not extending in a straight line, with a separating gap created by the cutting edge (6) in the workpiece (W) including a separating gap base of a width depending on the separating gap width and a specified cutting contour (7) **characterized** in that the swivel arms (5) are arranged on the tool side facing the workpiece (W), that the cutting edge (6) is of a circular design based on a circular radius $R_b$, that a relationship of

$$R_W = R_S - R_b$$

exists between the cutting contour radius $R_W$, the circular cutting contour (7), the circular radius $R_b$, the cutting edge (6) and the swivel radius $R_S$, a relationship of with the circle radius $R_b$ being smaller than the swivel radius $R_S$, the swivel radius $R_S$ being larger than the cutting contour radius $R_W$ and the cutting edge (6) being of a convex shape and the cutting radius $R_S$ having been selected in a way that a quasi point working contact (8) exists between the cutting edge (6) and the cutting contour (7) (Fig. 2).

3. A means based on the generic term of Claim 1, **characterized** in that the cutting edge (6) is designed as a circular shape based on a circular radius of $R_b$, that a relationship of

$$R_W = R_b + R_S$$

exists between the cutting contour radius $R_W$ of the circular cutting contour (7), the circular radius $R_b$, the cutting edge (6) and the swivel radius $R_S$ being smaller than the cutting contour radius $R_W$, and the cutting edge (6) being of a convex shape and that the swivel radius $R_S$ has been selected in such a way that a quasi point work contact (8) is generated between the cutting edge (6) and the cutting contour (7). (Fig. 3).

**Revendications**

1. Dispositif pour le tronçonnage d'une pièce par enlèvement de matière - avec
    un porte-outil à mouvements périodiques (1),
    au moins un outil en forme de lame (2),
    un porte-pièce (3) et
    un entraînement (4) agissant sur le porte-outil,
l'entraînement (4) imprimant au porte-outil (1) un mouvement pendulaire avec cinématique de bras en parallélogramme et rayon d'oscillation $R_S$ prédéfini, des bras oscillants (5) disposés sur le côté de l'outil opposé à la pièce (W) étant affectés à la cinématique de bras en parallélogramme, l'arête coupante (6) de l'outil (2) orientée vers la pièce (W) étant au moins partiellement non-rectiligne, une fente de tronçonnage générée dans la pièce (W) par l'arête coupante (6) présentant une surface de base avec une largeur correspondant à la largeur de la fente de tronçonnage et un contour de coupe (7) prédéfini, **caractérisé par le fait** que l'arête coupante (6) est en forme d'arc de cercle avec un rayon d'arc de cercle $R_b$, par le fait qu'il existe entre le rayon de contour de coupe $R_W$ du contour de coupe en forme d'arc de cercle (7), le rayon d'arc de cercle $R_b$ de l'arête coupante (6) et le rayon d'oscillation $R_S$ le rapport

$$R_W = R_b - R_S$$

le rayon d'arc de cercle $R_b$ étant supérieur au rayon d'oscillation $R_S$ et supérieur au rayon de contour de coupe $R_W$ et l'arête coupante (6) étant de forme concave et par le fait que le rayon d'oscillation $R_S$ est choisi de sorte à ce qu'il y ait entre l'arête coupante (6) et le contour de coupe (7) un contact d'usinage sous la forme d'un contact quasi-ponctuel (8) (fig. 1).

2. Dispositif pour le tronçonnage d'une pièce par enlèvement de matière - avec un porte-outil à mouvements périodiques (1), au moins un outil en forme de lame (2), un porte-pièce (3) et un entraînement (4) agissant sur le porte-outil, l'entraînement (4) imprimant au porteoutil (1) un mouvement pendulaire avec cinématique de bras en parallélogramme et rayon d'oscillation $R_S$ prédéfini, des bras oscillants (5) étant affectés à la cinématique de bras en parallélogramme, l'arête coupante (6) de l'outil orientée vers la pièce (W) étant au moins partiellement non-rectiligne, une fente de tronçonnage générée dans la pièce (W) par l'arête coupante (6) présentant une surface de base avec une largeur correspondant à la largeur de la fente de tronçonnage et un contour de coupe (7) prédéfini, **caractérisé par le fait** que les bras oscillants (5) sont disposés sur le côté de l'outil orienté vers la pièce (W), par le fait que l'arête coupante (6) est en forme d'arc de cercle avec un rayon d'arc de cercle $R_b$, par le fait qu'il existe entre le rayon de contour de coupe $R_W$ du contour de coupe en forme d'arc de cercle (7), le rayon d'arc de cercle $R_b$ de l'arête coupante (6) et le rayon d'oscillation RS le rapport

$$R_W = R_S - R_b$$

le rayon d'arc de cercle $R_b$ étant inférieur au rayon d'oscillation $R_S$, le rayon d'oscillation $R_S$ étant supérieur au rayon de contour de coupe RW et l'arête coupante (6) étant de forme convexe et par le fait que le rayon d'oscillation

$R_S$ est choisi de sorte à ce qu'il y ait entre l'arête coupante (6) et le contour de coupe (7) un contact d'usinage sous la forme d'un contact quasi-ponctuel (8) (fig. 2).

3. Dispositif selon le préambule de la revendication 1, **caractérisé par le fait** que l'arête coupante (6) est en forme d'arc de cercle avec un rayon d'arc de cercle $R_b$, par le fait qu'il existe entre le rayon de contour de coupe $R_W$ du contour de coupe en forme d'arc de cercle (7), le rayon d'arc de cercle $R_b$ de l'arête coupante (6) et le rayon d'oscillation $R_S$ le rapport

$$R_W = R_b + R_S$$

le rayon d'arc de cercle $R_b$ et le rayon d'oscillation $R_S$ étant inférieurs au rayon de contour de coupe $R_W$ et l'arête coupante (6) étant de forme convexe et par le fait que le rayon d'oscillation $R_S$ est choisi de sorte à ce qu'il y ait entre l'arête coupante (6) et le contour de coupe (7) un contact d'usinage sous la forme d'un contact quasi-ponctuel (8) (fig. 3).

**Fig. 1**

$$R_W = R_b - R_5$$

Fig. 2

$$R_W = R_S - R_b$$

Fig.3

$$R_W = R_b + R_S$$